## Europäisches Patentamt

## European Patent Office

## Office européen des brevets

(11) Veröffentlichungsnummer: **0 241 575**
**A2**

(12) # EUROPÄISCHE PATENTANMELDUNG

(21) Anmeldenummer: 86107828.5

(22) Anmeldetag: 09.06.86

(51) Int. Cl.⁴: **B 23 Q 7/05**, B 27 L 11/00, B 27 B 25/02, B 27 C 5/06

(30) Priorität: 14.04.86 DE 3612508

(43) Veröffentlichungstag der Anmeldung: 21.10.87 Patentblatt 87/43

(84) Benannte Vertragsstaaten: AT DE IT

(71) Anmelder: **Gebr. Klöckner GmbH & Co.,** **D-5239 Hirtscheid-Nistertal (DE)**

(72) Erfinder: **Kolb, Lothar, In den Mühlenerlen,** **D-5239 Hirtscheid/Westerwald (DE)**

(74) Vertreter: **Gramm, Werner, Prof. Dipl.-Ing. et al,** **Patentanwälte Gramm + Lins** **Theodor-Heuss-Strasse 2, D-3300 Braunschweig (DE)**

(54) **Einzugswalze für Zerspaner o. dergl.**

(57) Die Erfindung betrifft eine Einzugswalze (1) als Förderelement für insbesondere holzverarbeitende Maschinen, z.B. Hackmaschinen, Zerspaner, mit kreisringförmig angeordneten Mitnehmerzähnen (2), die mit lichtem axialen Abstand voneinander liegende Zahnringe (3) bilden, die zwischen sich jeweils eine ringförmige Zahnlücke (4) einschließen, wobei die Einzugswalze (1) an zumindest einer Stirnseite mit einer ringförmigen Zahnlücke (4a) endet. Zur Sicherung eines störungsfreien Transportes verschiedener Materialien wird vorgeschlagen, daß zumindest die Mantelfläche der stirnseitig vorgesehenen Zahnlücke (4a) mit einer Oberflächenprofilierung, z.B. einer Zahnriffelung (5) versehen ist, wobei es vorteilhaft ist, wenn die stirnseitig vorgesehene Zahnlücke (4a) durch eine separate Scheibe (6) gebildet ist, die an dem Hauptkörper der Einzugswalze (1) befestigt ist.

# Patentanwälte GRAMM + LINS

Dipl.-Ing. Prof. Werner Gramm
Dipl.-Phys. Edgar Lins

European Patent Attorneys

024 4575

Gebr. Klöckner GmbH & Co.

5239  Hirtscheid-Nistertal

Anwaltsakte

192-8 EP-1

Datum

6. Juni 1986

Einzugswalze für Zerspaner o.dergl.

Die Erfindung betrifft eine Einzugswalze als Förderelement für insbesondere holzverarbeitende Maschinen, z.B. Zerspaner, mit kreisringförmig angeordneten Mitnehmerzähnen, die mit lichtem axialen Abstand voneinander liegende Zahnringe bilden, die zwischen sich jeweils eine ringförmige Zahnlücke einschließen, wobei die Einzugswalze an zumindest einer Stirnseite mit einer ringförmigen Zahnlücke endet.

Derartige Einzugswalzen werden bei vielen Maschinen der Holz- und Kunststoffbranche zum kontrollierten Transport der zu verarbeitenden Materialien eingesetzt. Dabei finden zwei oder mehr kammartig ineinandergreifende Einzugswalzen Verwendung, die daher gegeneinander um jeweils eine halbe, sich aus Zahnring und Zahnlücke zusammensetzende Teilung axial versetzt sind. Zumindest eine der Einzugswalzen ist mit ihrer durch eine ringförmige Zahnlücke definierten Stirnseite unmittelbar neben einer Maschinenseitenwand gelagert. In diesem Bereich kommt es immer wieder zu Blockierungen, da sich flaches Material, Schwarten, Spreißel o.dergl. in der genannten Zahnlücke festsetzt und zu Verklemmungen zwischen der Einzugswalze und der Maschinenseitenwand führt. So werden z.B. Schwarten und Spreißel, die in Sägewerken anfallen, oft hochkant zugeführt und erzeugen dann die genannten Störungen. Da die derartige Einzugswalzen umfassenden

- 2 -

Anlagen meist ohne manuelle Bedienung arbeiten, führt ein Blockieren automatisch zum Stillstand der gesamten Anlage, also z.B. eines Sägewerkes, und somit zu einem erheblichen Produktionsausfall.

Der Erfindung liegt die Aufgabe zugrunde, die eingangs erläuterte Einzugswalze so zu modifizieren, daß im Bereich zwischen Maschinenseitenwand und Zahnlücke der Einzugswalze Störungen im Materialvorschub vermieden werden.

Diese Aufgabe wird gemäß der Erfindung dadurch gelöst, daß zumindest die Mantelfläche der stirnseitig vorgesehenen Zahnlücke mit einer Oberflächenprofilierung, z.B. einer Zahnriffelung versehen ist.

Durch die Zahnriffelung der unmittelbar neben einer Maschinenseitenwand umlaufenden Zahnlücke werden auch z.B. schmale Leisten vom Zwangsvorschub der Einzugswalzen erfaßt und somit störungsfrei der Verarbeitungsmaschine, z.B. einem Hackrotor zugeführt.

Die stirnseitig vorgesehene Zahnlücke kann durch eine separate Scheibe gebildet sein, die an dem Hauptkörper der Einzugswalze befestigt ist. Diese formschlüssige Befestigung kann z.B. über Schrauben erfolgen, die bei einem Verschleiß der geriffelten Zahnlücke ein einfaches Auswechseln ermöglichen.

Es kann ferner vorteilhaft sein, wenn sich die Einzugswalze aus mehreren, jeweils einen Zahnring sowie eine Zahnlücke umfassenden Walzenscheiben zusammensetzt, die drehfest und lösbar miteinander verbunden sind. Da die Abnutzung derartiger Einzugswalzen überwiegend in deren mittleren Bereich stattfindet, was insbesondere beim Transport von Rundmaterial gilt, kann nunmehr der Austausch einer kompletten Einzugswalze vermieden werden;
das Auswechseln einzelner Walzenscheiben ist ohne weiteres möglich. Da für diese Ausführungsform die Walzenscheiben einzeln
herzustellen sind, ergibt sich nunmehr fertigungstechnisch die
vorteilhafte Möglichkeit, die Mantelflächen aller Zahnlücken mit
einer Zahnriffelung o.dergl. zu versehen. Hierdurch erhält man
einen störungsfreien Transport aller möglichen Materialformen
und -arten. Hinsichtlich der einzelnen Walzenscheiben ist nicht
nur eine preisgünstige Fertigung, sondern auch eine reduzierte
Lagerhaltung möglich.

Die Zahnriffelungen oder aber die gesamte separate stirnseitige
Scheibe bzw. die Walzenscheiben können vergütet sein. Die Verbindung der Einzugswalze bzw. der Walzenscheiben mit der sie antreibenden Welle erfolgt durch Keile, Spannelemente oder Vielkeilprofile.

In der Zeichnung sind einige als Beispiele dienende Ausführungsformen der Erfindung dargestellt. Es zeigen:

    Figur 1    eine neben einer Maschinenseitenwand angeordnet
               Einzugswalze im Längsschnitt;

    Figur 2    im Ausschnitt eine stirnseitige Darstellung der
               Einzugswalze gemäß Figur 1;

    Figur 3    eine abgewandelte Ausführungsform in einer Darstellung gemäß Figur 1 und

    Figur 4    im Ausschnitt eine Stirnansicht der Darstellung
               gemäß Figur 3.

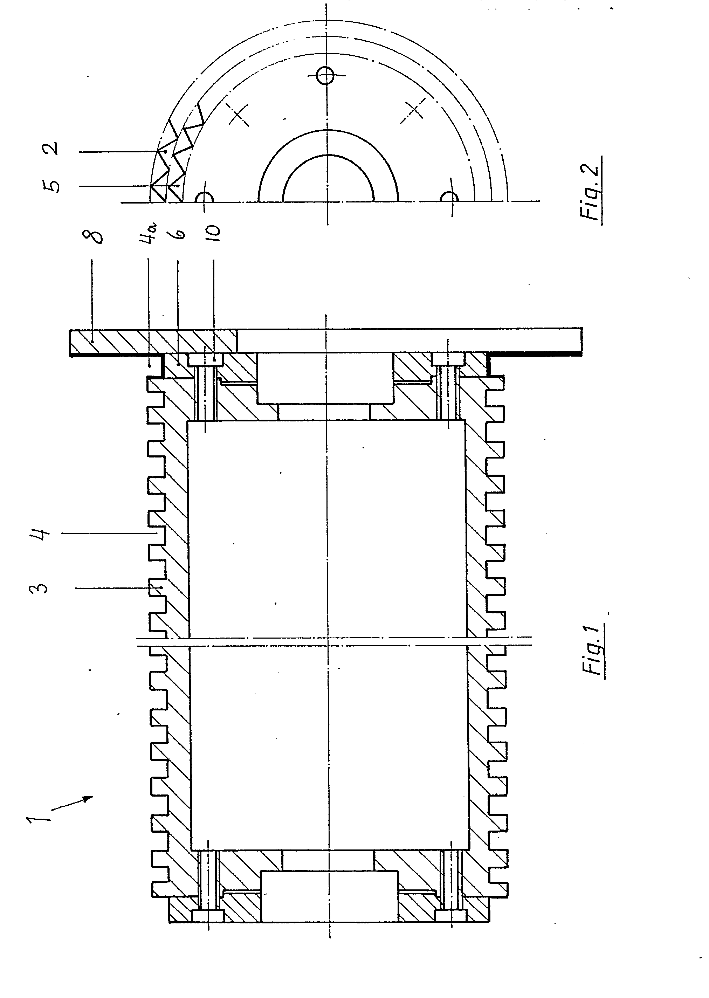

Figur 1 zeigt eine Einzugswalze 1 mit kreisringförmig angeordneten Mitnehmerzähnen 2, die mit lichtem axialen Abstand voneinander liegende Zahnringe 3 bilden, die zwischen sich jeweils eine
ringförmige Zahnlücke 4 einschließen. Diese Einzugswalze endet
an ihren beiden Stirnseiten jeweils mit einer ringförmigen Zahnlücke 4a, deren Mantelfläche mit einer Zahnriffelung 5 versehen
ist. Diese stirnseitig vorgesehene Zahnlücke 4a ist durch jeweils eine separate Scheibe 6 gebildet, die an dem Hauptkörper
der Einzugswalze 1 über Schrauben 10 lösbar befestigt ist.

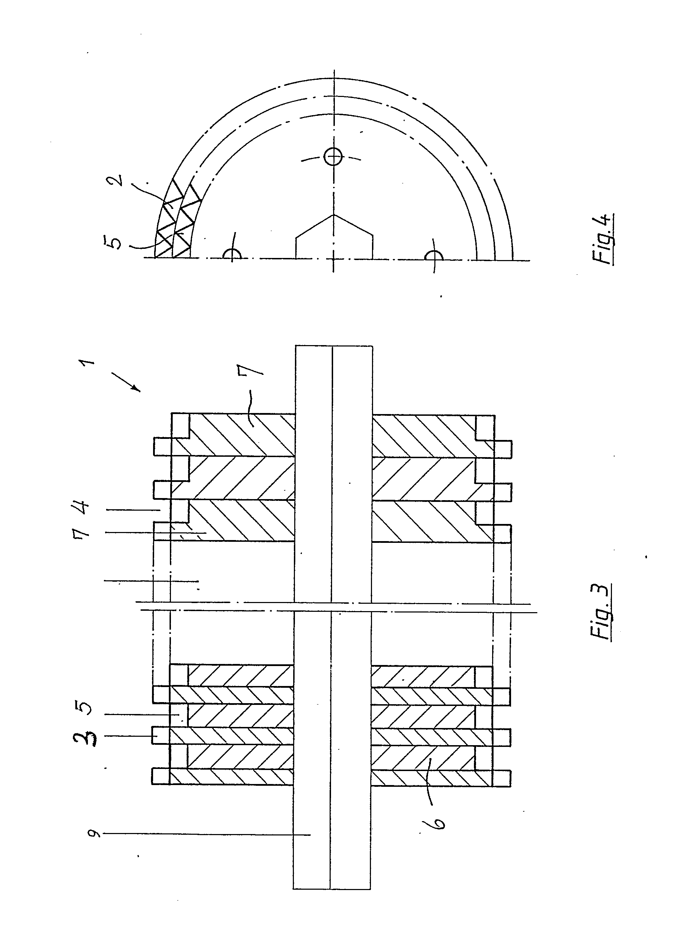

Figur 3 zeigt gegenüber Figur 1 zwei abgewandelte Ausführungsformen. Gemäß der rechten Hälfte der Darstellung in Figur 3 setzt
sich die Einzugswalze 1 aus mehreren, jeweils einen Zahnring 3
sowie eine Zahnlücke 4 umfassenden Walzenscheiben 7 zusammen, die
in nicht dargestellter Weise drehfest und lösbar miteinander
verbunden sind. Die linke Hälfte der Figur 3 zeigt eine Einzugswalze, bei der sowohl die Zahnringe 3 als auch die Zahnlücken 4
durch jeweils separate Scheiben gebildet sind, die wiederum in

- 5 -

nicht dargestellter Weise durch Schrauben, einen Zuganker o.dgl.
lösbar miteinander verbunden sind. Die die Einzugswalze 1 antreibende Welle ist mit dem Bezugszeichen 9 versehen.

# Patentanwälte GRAMM + LINS

Dipl.-Ing. Prof. Werner Gramm
Dipl.-Phys. Edgar Lins

European Patent Attorneys

0241575

Gebr. Klöckner GmbH & Co.

5239 Hirtscheid-Nistertal

Anwaltsakte

192-8 EP-1

Datum

6. Juni 1986

Patentansprüche:

1. Einzugswalze (1) als Förderelement für insbesondere holzverarbeitende Maschinen, z.B. Zerspaner, mit kreisringförmig
   angeordneten Mitnehmerzähnen (2), die mit lichtem axialen
   Abstand voneinander liegende Zahnringe (3) bilden, die zwischen sich jeweils eine ringförmige Zahnlücke (4) einschließen, wobei die Einzugswalze (1) an zumindest einer
   Stirnseite mit einer ringförmigen Zahnlücke (4a) endet,
   d a d u r c h   g e k e n n z e i c h n e t, daß zumindest
   die Mantelfläche der stirnseitig vorgesehenen Zahnlücke (4a)
   mit einer Oberflächenprofilierung, z.B. einer Zahnriffelung (5) versehen ist.

2. Einzugswalze nach Anspruch 1, dadurch gekennzeichnet, daß
   die stirnseitig vorgesehene Zahnlücke (4a) durch eine separate Scheibe (6) gebildet ist, die an dem Hauptkörper der
   Einzugswalze (1) befestigt ist.

3. Einzugswalze nach Anspruch 1 oder 2, gekennzeichnet durch
   mehrere, jeweils einen Zahnring (3) sowie eine Zahnlücke (4) umfassende Walzenscheiben (7), die drehfest und
   lösbar miteinander verbunden sind.

- 2 -

- 2 -

4. Einzugswalze nach Anspruch 3, dadurch gekennzeichnet, daß die Mantelflächen aller Zahnlücken (4) mit einer Zahnriffelung (5) o.dergl. versehen sind.


Patentanwälte
G r a m m   +   L i n s
Gr/Gru.

Fig.1

Fig.2

0241575

Fig. 3

Fig.4